(19) Europäisches Patentamt
European Patent Office
Office européen des brevets

(11) **EP 3 563 137 B1**

(12) **EUROPEAN PATENT SPECIFICATION**

(45) Date of publication and mention
of the grant of the patent:
**03.02.2021 Bulletin 2021/05**

(51) Int Cl.:
***G01M 17/02*** *(2006.01)*

(21) Application number: **17836058.2**

(22) Date of filing: **27.12.2017**

(86) International application number:
**PCT/IB2017/058427**

(87) International publication number:
**WO 2018/122736 (05.07.2018 Gazette 2018/27)**

(54) **METHOD FOR CHECKING TYRES**

VERFAHREN ZUR PRÜFUNG VON REIFEN

PROCÉDÉ POUR LE CONTRÔLE DE PNEUMATIQUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.12.2016 IT 201600132116**

(43) Date of publication of application:
**06.11.2019 Bulletin 2019/45**

(73) Proprietor: **Pirelli Tyre S.p.A.**
**20126 Milano (IT)**

(72) Inventors:
• **BOFFA, Vincenzo**
**I-20126 Milano (IT)**

• **ANTOJ, Riccardo**
**I-20126 Milano (IT)**
• **HELD, Alessandro**
**I-20126 Milano (IT)**
• **BALLARDINI, Valeriano**
**I-40026 Imola (BO) (IT)**
• **CASADIO TOZZI, Giuseppe**
**I-40026 Imola (BO) (IT)**

(74) Representative: **Porta & Consulenti Associati**
**S.p.A.**
**Via Vittoria Colonna, 4**
**20149 Milano (IT)**

(56) References cited:
**WO-A1-93/19929       WO-A1-2015/004587
WO-A1-2015/079370     JP-A- H01 176 910**

**Description**

The present invention relates to a method for checking tyres, for example in a tyre production line, in particular a method for checking for the possible presence of defects close to the walls of a tyre.

The production cycles of a tyre provide for making and/or assembling the various components of a tyre being processed in one or more building lines and then subjecting the green tyre to a moulding and vulcanization process adapted for defining the structure of the tyre according to a desired geometry and tread pattern.

The tyre, when moulded and vulcanized, is defined by a toroidal structure wound around a rotation axis and substantially symmetrical with respect to an axial middle plane perpendicular to said rotation axis. In particular the toroidal structure comprises a crown portion arranged substantially perpendicular to the axial middle plane in a radially outer area of the tyre, two anchoring portions arranged in radially inner areas of the tyre, respectively, on opposite sides of the axial middle plane and two side portions that respectively extend on opposite sides of the axial middle plane between one of the anchoring portions and the crown portion.

The term "axial middle plane" is meant to indicate a plane perpendicular to the rotation axis equidistant from the axially outer portions of the tyre itself. The term "crown portion" of the tyre is meant to indicate a portion of the tyre arranged substantially perpendicular to the axial middle plane, in a radially outer area of the tyre, and corresponding to the tread band and to portions of the belt structure and of the carcass structure arranged radially internally with respect to the tread band.

The term "anchoring portions" of the tyre, commonly also defined as "beads", is meant to indicate the radially inner areas of the tyre, respectively arranged on opposite sides of the axial middle plane, configured so as to engage with the mounting rim of the tyre.

The term "side portions" of the tyre is meant to indicate portions of the tyre that respectively extend on axially opposite sides of the axial middle plane between each of the anchoring portions and the crown portion, corresponding to the actual sidewalls and to portions of the carcass structure arranged in axially inner position with respect to the aforementioned sidewalls.

The terms "resting side portion" and "free side portion" of the tyre are meant to respectively indicate a side portion resting on a resting plane and the opposite side portion arranged a certain height from the resting plane. The term "outer surface" or "inner surface" of the tyre is meant to respectively indicate the surface that remains visible after the coupling of the tyre with its mounting rim and that which is no longer visible after said coupling. The inner and outer surfaces delimit the tyre.

The term "measurement surface" is meant to indicate a surface subjected specifically to checking having small dimensions with respect to said outer surface.

The term "three-dimensional profile" or "profile" of the surface of the tyre or of the tyre is meant to indicate the perimeter of at least part of the surface of the tyre, preferably of at least one from the outer surface and the inner surface of the tyre. More specifically, the term "profile" is meant to indicate the perimeter of a three-dimensional object, the shape, traced on a projection plane by the lines passing through the centre of view and tangent to the surface of the object. The profile of the tyre therefore includes a set of points in a system of coordinated axes indicating the position in space of the tyre itself, the envelope of the points defining the inner and outer surface of the tyre. Portions of the profile include portions of the inner and/or outer surface of the tyre.

The term "model" of tyre, is meant to indicate the set of geometric characteristics that distinguish a tyre, in other words, for example, width of the section, height of the sidewalls, fitting diameter and/or outer diameter. The term "model tyre" is therefore meant to indicate a tyre having the set of geometric characteristics defined by the model to which it belongs.

The term "type" of tyre, is meant to indicate the set of structural characteristics (like for example single- or two-ply structure, radial or with crossed carcass plies, with or without belt structure, type of belt structure - crossed belts, zero degrees, crossed belts and zero degrees -, type of tread band - with one or more layers, etc.), and technological characteristics (like for example compound of the various structural components, materials making up the textile or metal reinforcing cords, type of formation of the reinforcing cords, etc.).

In known production cycles, to identify defects, the moulded and vulcanized tyre is subjected to a manual visual check. One of such manual visual checks is aimed at discarding tyres in which the side portion has low rigidity, i.e. at identifying the so-called "weak sidewall" defect, the term sidewall meaning a side portion of the finished tyre.

US2006/0272408 describes a method and an apparatus for measuring uniformity of the tyre. The method comprises the steps of mounting the tyre on a spindle, pressing a circumferential surface of a rotating drum against the tread surface of the tyre with a first pressing force, rotating the tyre about its axis, and calculating the forces on a first and a second plane of the tyre through calculation means while the tyre is rotating.

WO 2015/079370 to the same Applicant describes an apparatus for checking tyres comprising a resting plane configured to receive a tyre with axial middle plane parallel to the resting plane, defining a resting side portion and a free side portion arranged at a certain height with respect to the resting plane. A pushing element is configured to apply a force aimed towards the resting plane to a measurement surface of the free side portion. A positioning actuator is operatively associated with the pushing element and configured to move the pushing element with at least one motion component perpendicular to a rotation axis of the tyre. The apparatus also comprises devices for changing the angular position of the measurement surface. A checking unit is programmed to detect a first value of output data at every position of the measurement surface as a function of a first value of input data kept substantially constant along at least one complete rotation of the measurement surface about the rotation axis and to detect a second value of the output data at every position of the measurement surface. The second value of the output data corresponds to a second value of the input data kept substantially constant along at least one complete rotation of the measurement surface. The checking unit comprises a module programmed to calculate, at every position of the measurement surface, a difference between the second value of the output data and the first value of the output data.

The Applicant has observed that the accuracy of the manual checks carried out up to now depends greatly on the experience of the operator carrying out the check and has a great deal of subjectivity and at the same time the insertion of a more accurate manual check to improve the quality of the end product would risk excessively increasing the production time of a tyre.

The Applicant has observed that the use of automatic checks on the tyre of the type of those illustrated in US 2006/0272408 can improve the objectivity of the check itself but due to the large number of factors in play, precision in the measurement and repeatability of the checking process may not be ensured.

WO 2015/079370 describes an apparatus and a method for detecting the "weak sidewall" defect that provides for arranging the tyre to be checked on a resting plane according to ways that do not change relative to the check to be carried out, and acting on the free side portion for equal to or different time periods with forces of different size. In this way, some factors that led to uncertain repeatability of the checks and a good outcome thereof can be reduced.

WO2015/004587 describes an apparatus and a method for controlling tyres in a production line, wherein a compression roller is used to apply a compression force to a tyre on a resting plane and an image of the deformation of the side wall is captured and used to generate a control signal which is then compared to a reference signal, the reference signal being generated using the same deformation force as used during the test of the production tyre.

In order to improve the reliability and the repeatability of the checks, the Applicant has raised the issue of devising a method for detecting the "weak sidewall" defect that does not need complex setup, configuration and positioning procedures of the elements intended to apply the pressing force on the sidewall of the tyre to be checked.

The Applicant has found that by providing, in a database for every model of tyre, the position of the free side portion on which to carry out the check in an absolute manner and not relative to other elements of the checking apparatus such as the resting plane, and the value of the modulus of a force to be applied always depending on the model of the tyre, it is possible to reduce all of the factors that can lead to uncertain repeatability of the checks and to an unreliable outcome thereof, minimising the risk of incorrect checks due to an incorrect force applied.

The Applicant has also found that the provision of the tyre on a resting plane, the realization of a database including, for every model of tyre, a three-dimensional profile of the surface on which a deformation of the surface itself is carried out, and the provision of the value of the force with which said deformation is carried out, said value of the force being calculated by applying a deformation at an "absolute" height of the tyre, result in, when a tyre to be checked is examined through the application of said force, a reliable and repeatable check being obtained, in which the deformation is calibrated according to the characteristics of the tyre itself.

More precisely, according to an aspect, the invention concerns a method for checking tyres of a plurality of different models according to claim 1.

The Applicant deems that the method according to the invention solves the problems outlined thanks to different factors. Indeed, according to the invention, a database is created, in which every model of tyre is associated with two values. The first value is that of a three-dimensional profile of the tyre, in particular of at least one outer surface thereof. For example, such a three-dimensional profile includes a plurality of coordinates of points of a portion of outer surface thereof. The three-dimensional profile makes it possible to select an "absolute" system of coordinates, i.e. it is possible to establish at what point the surface of the tyre that is compressed and deformed in the subsequent step of the method is located, without relative reference to elements of the checking apparatus. The three-dimensional profile makes it possible to be aware of the spatial position of the tyre independently from elements external to it. Therefore, the reference for the apparatus that has to press the tyre is always given with respect to the profile of the tyre that represents the reference "zero height". Furthermore, a second value in the database is a statistical value, function of measured values of a force necessary to take said tyre, or a portion of the outer surface thereof, to a certain height. This height is pre-determined and established as a function of the values of the height of points of the three-dimensional profile of the tyre.

The tyre is thus deformed so as to bring it to such a height. The deformation takes place by acting on a portion of outer surface of the model tyre, called measurement surface, the three-dimensional profile of said outer surface, which includes the "absolute" height of points of such a surface, being present in the database.

By taking the tyre to said "absolute" height, since it is dependent on values of the three-dimensional profile, a force necessary to maintain said height during a relative rotation of the tyre with respect to said at least one device is measured. The height can be substantially kept constant or variable along a rotation of the tyre about its rotation axis. The rotation is called "relative" since it can be an actual rotation of the tyre about its rotation axis with said at least one device substantially stationary, as well as a rotation of said at least one device used to deform the outer surface of the tyre and take it to said desired height while the tyre is stationary, that is, it does not rotate about its rotation axis.

The measurement surface changes during the rotation and substantially forms preferably a ring-shaped surface centred around the rotation axis of the tyre.

The device that deforms the tyre by taking a portion thereof to the device height can be a mechanical device, such as a tool, or another type of noncontact device, for example using compressed air.

Therefore, no investigative step preliminary to the deformation is necessary to determine the spatial position of the tyre, for example with respect to the resting plane. The position of the tyre, and therefore of the measurement surface, is always known thanks to its three-dimensional profile being known.

From this measured force, resulting for example in a plurality of measurements taken every given time period, or every angular rotation interval, a resulting statistical value is calculated, which takes into consideration the measurements taken. This resulting statistical value is then saved in the database.

The database is thus created by obtaining the aforementioned two values, i.e. three-dimensional profile and statistical force value, for every model of tyre belonging to a certain plurality. This pair of values is associated with every model of tyre of a plurality.

It is foreseen to obtain a different statistical force value for every model of tyre, because the tyres, depending on the model, do not all offer the same resistance to deformation and are not therefore deformable in the same way. For example, excessively deforming a tyre can cause permanent damage to it and/or make it not possible to accurately determine the possible presence of defects. A deformation that is too "small" may not make it possible to detect small defects. Therefore, it is advantageously foreseen to make a database where every model of tyre is associated with a force to be applied on the measurement surface so as to optimise the measurements carried out according to the method of the invention for detecting possible defects.

Therefore, given a tyre to be checked, it is tested to detect defects, such as the weak sidewall, by applying a force to it as obtained from the database described above, i.e. the force applied is equal to the statistical value. Therefore, for each tyre to be checked, the force applied depends on the model of tyre itself to which the tyre to be checked belongs.

The Applicant deems that, by using the aforementioned solution, the method for checking tyres makes it possible to make an automated checking system for tyres manufactured/produced in any production plant, including plants that produce a large number of models of tyres, even very different from one another, on an industrial scale, at the same time meeting the requirements outlined above with particular reference to the accuracy of the checks, to the compatibility with the manufacturing/production cycle time and to the flexibility and specificity of the entire checking system with regard to every model of tyre.

The present invention in the aforementioned aspect can have at least one of the following preferred characteristics.

Preferably, it is foreseen for the action of pushing said measurement surface of said model tyre to include:

• shifting said device towards said model tyre arranged on the resting plane so as to rest on a measurement surface.

Preferably, it is foreseen for the action of pushing said measurement surface of said model tyre to include:

• pushing, through said device, said measurement surface up to a predetermined device height that is calculated with respect to a value that is a function of a height of said undeformed measurement surface as present in said three-dimensional profile.

The pushing on the portion of outer surface of the model tyre preferably takes place through a device. More preferably, such a device can be brought towards or away from the outer surface of the tyre, for example along a vertical axis. The device can advantageously include a pushing roller, adapted for rotating about an axis, while it slides on the outer surface of the tyre.

Preferably, it is foreseen to keep said device height substantially constant along at least one complete relative rotation of said model tyre with respect to said device about said rotation axis.

In the case in which it is wished to take a portion of the surface of the free side portion of the model tyre to a constant height during said relative rotation, the height of at least one point, preferably of a plurality of points, of the model tyre as given by the profile is firstly determined through processing of the saved profile for example in a suitably memory. Having taken this height or these heights from the three-dimensional profile of the model tyre, and having established which operation to carry out on it to determine the device height, the measurement surface is deformed so as to bring it towards the resting plane up to such a value, i.e. distance between resting plane and deformed surface of the model tyre, which is kept substantially constant for the entire rotation.

Alternatively, the height to which the model tyre is brought can depend on a plurality of heights, i.e. a plurality of points from 1 to n of the three-dimensional profile is for example considered, a statistical quantity thereof (mean, median, etc.) is calculated and a constant value is subtracted from such a statistical quantity.

In both cases, in the case in which a tool carries out such a deformation, the position along the vertical axis of the device that deforms the surface of the tyre remains substantially unchanged during the relative rotation of 360° between device and tyre.

Preferably, it is foreseen to determine a mean height with respect to said resting plane of a plurality of points of said three-dimensional profile of said measurement surface of said model tyre.

Preferably, it is foreseen to push said measurement surface up to a predetermined device height that is calculated with respect to said mean height of said measurement surface of said model tyre.

In a preferred example, the height to which the model tyre is brought, which is preferably maintained for the entire relative rotation of the tyre, is a function of the mean height of a plurality of points belonging to the measurement surfaces. From such a mean height calculated from the three-dimensional profile of the model tyre, the device height can be obtained in various ways.

In this preferred example, no exact difference is made between the height of the points forming the three-dimensional profile and the height to which it is wished to bring the measurement surface of the model tyre, but the exact height that can be obtained from a plurality of points forming the profile of the tyre is initially averaged to find a single mean height of the entire ring-shaped surface, from which the value to which it is wished to bring the measurement surface is subtracted. Good accuracy is obtained by limiting the necessary calculation and checking capability.

Preferably, it is foreseen to calculate said device height in a plurality of angularly spaced points; for each point, said device height being equal to the difference between a predetermined constant value and the height of said point as present in said three-dimensional profile of each model tyre. The device height depends for every point on the height of the undeformed surface in the same point as obtained from the three-dimensional profile. Therefore, at every moment of time t the device height can differ, i.e. the device height at time t and at time t+1 can be different. In this preferred example, since a device is used to carry out the compression, the position along a vertical axis of the device can change during the relative rotation between tyre and device.

Preferably, the action of applying said statistical value to an outer surface of said tyre to be checked includes:

- arranging said tyre to be checked having a rotation axis (X) perpendicular to said resting plane on said resting plane that defines a resting side portion and a free side portion of said tyre to be checked. Preferably, the action of applying said statistical value to an outer surface of said tyre to be checked includes:
- determining the model of said tyre to be checked.

Preferably, the action of applying said statistical value to an outer surface of said tyre to be checked includes:

- recovering said three-dimensional profile and said statistical value of said force associated with said determined model of said tyre to be checked from said database.

Preferably, the action of applying said statistical value to an outer surface of said tyre to be checked includes:

- pushing a measurement surface of said tyre to be checked so as to apply a device compression force on said measurement surface towards the resting plane, said device compression force being equal to said statistical value.

Preferably, the action of applying said statistical value to an outer surface of said tyre to be checked includes:

- setting said tyre to be checked in relative rotation with respect to said device so as to push a plurality of different measurement surfaces, angularly spaced, keeping the device compression force on said measurement surfaces substantially constant along at least one complete rotation about said rotation axis.

Preferably, the action of applying said statistical value to an outer surface of said tyre to be checked includes:

- measuring a height of said measurement surfaces at a plurality of relative angular positions of said tyre to be checked along said complete rotation during said pushing action.

Preferably, the action of applying said statistical value to an outer surface di said tyre to be checked includes:

- comparing said height of said measurement surfaces at a plurality of relative angular positions of said tyre to be checked with a height of a plurality of points of said three-dimensional profile of said tyre to be checked at the same angular positions.

Preferably, the action of applying said statistical value to an outer surface of said tyre to be checked includes:

- determining whether said tyre to be checked has a defect based on said comparison.

Once the database of model tyres has been determined and provided, it is therefore possible to detect possible defects, such as a weak sidewall, on tyres to be checked corresponding to the different model tyres of the database.

Once the tyre to be checked has been positioned on the resting plane, firstly the model to which it corresponds is determined. From the determining of the model, the corresponding values of the three-dimensional profile and of the statistical value associated with the force, both dependent on the model to which the tyre to be checked corresponds, are taken from the database. Such a statistical value is then applied to a measurement surface of the tyre to be checked, so as to deform it.

The measurement surface, like in the model tyre, is a portion of the outer surface of the free portion of the tyre to be checked.

This statistical value, called device force, is applied substantially constantly for a complete rotation of the tyre to be checked. Also in this case, the rotation is relative with respect to the device, i.e. it can be the tyre to be checked that rotates or the device with which the device force is applied. Due to the compression caused by the force, the measurement surface moves to a height that is measured. The values of this height, when compared with the values of the three-dimensional profile, identify whether or not defects are present, such as the weak sidewall defect.

Preferably, said action of pushing said measurement surface of said tyre to be checked includes:

- shifting said device towards said tyre to be checked arranged on the resting plane so as to rest on a measurement surface.

Preferably, said action of pushing said measurement surface of said tyre to be checked includes:

- pushing said measurement surface through said device so as to apply a device compression force on said measurement surface towards the resting plane, said device compression force being equal to said statistical value.

Like in the case of the model tyre, in which the measurement surface was brought to a certain height through a device, in this case a force is applied to the measurement surface of the tyre to be checked. Advantageously, the device is the same in the case of the tyre to be checked and of the model tyre.

Preferably, the action of calculating said statistical value includes calculating a mean or a median of said force measured on said plurality of measurement surfaces at a plurality of relative angular positions.

The statistical value can for example be the mean or the median of a plurality of force values that are measured, for example at regular intervals, time intervals or space intervals (angles).

Preferably, the action of providing said database includes, for each model tyre of said plurality of different models, detecting at least one three-dimensional profile of a surface of said ring-shaped model tyre with centre in said rotation axis (X) of said tyre, said measurement surfaces being part of said ring-shaped surface.

Since the model tyre is deformed during a complete rotation of 360° relative to the device about its rotation axis, the deformed measurement surfaces, if combined, form a ring-shaped surface about the rotation axis of the tyre. Therefore, preferably, the three-dimensional profile saved in the database of the model tyre comprises at least one such surface.

The three-dimensional profile, however, can be detected for the entire model tyre and not just a portion thereof, for example the profile of the entire inner surface and/or of the entire outer surface thereof can be detected.

On this ring-shaped surface, and in detail in a portion thereof called measurement surface, the deformation is carried out. When a device carries out the deformation, the tyre and device are set in relative rotation, so that the device at every time t deforms a different measurement surface, which continues to be part of the ring-shaped surface, angularly displaced with respect to the measurement surface with which the device was in contact at time t-1. This deformation ends when the entire ring-shaped surface has been crossed (i.e. a relative rotation of 360° has been carried out) and deformed by the device.

Preferably, the relative angular rotation speed between model tyre and device is substantially constant.

Preferably, the action of pushing through said device said measurement surface of said model tyre up to said device height includes pushing said measurement surface through said device up to a device height comprised between about 5 mm and about 30 mm. More preferably said device height is comprised between about 5 mm and about 15 mm.

Through laboratory testing, the Applicant has verified that the height to which the measurement surface of the model tyre is to be brought, if within this claimed range, is such as to cause a substantial displacement, but always in elastic field, of the free side portion to evaluate the response thereof in terms for example of rigidity.

Preferably, said statistical value as a function of said force is comprised between about 10 N and about 150 N.

Preferably, said action of measuring a height of said measurement surfaces at a plurality of relative angular positions of said tyre to be checked along said complete rotation during said pushing action includes:

- determining variations of said measured height with respect to an average of said measured height;
- sending an error signal if none of said variations is greater than a predetermined threshold.

Advantageously, a feedback control is foreseen so as to ascertain whether the force applied to the tyre to be checked is "correct". Correct means that it is suitable for the type of model of tyre to be checked. In fact, a force applied can be suitable for one model of tyre and not suitable for another. In order to carry out this operation, the height measurements to which the measurement surface of the tyre to be checked is brought are monitored not only as value, but also as progression over time. If such measurements differ "slightly" from an average value, i.e. the measurements are substantially "flat" and do not have large fluctuations, this means that an error is present, for example either the force applied to the tyre to be checked is too low or it is too high.

It is thus possible for example to make corrective measures.

The fluctuation threshold is for example equal to about ± 2 N.

Preferably, said action of sending an error signal comprises:

- changing said statistical value.

A "flat" profile indicates a force not suitable for the characteristics of the tyre to be checked. Therefore, the statistical value is changed, for example recalculating it by carrying out the steps of the aspect of the invention described above.

Preferably, the action of comparing said height of said measurement surface of said tyre to be checked at a plurality of relative angular positions with a height of a plurality of points of said three-dimensional profile at the same angular positions includes comparing said height of said measurement surface and a corresponding height of a point of said three-dimensional profile every 0.1 radians.

When the measurement surface of the tyre to be checked is compressed at constant force, preferably the height to which it is brought is measured continuously, in other words for every displacement of 0.1 radians of the tyre (for example relative displacement between tyre and device) so as to have a sufficiently precise sampling to evaluate the weak sidewall defect. For every point measured, therefore, a comparison is carried out between the measured height and the height of the corresponding point (i.e. of the point at the same angle) of the three-dimensional profile.

Preferably, said action of measuring said force in said model tyre includes measuring said force every 0.1 radians.

Preferably, it is foreseen to calculate a plurality of differences between said height of said measurement surfaces and said height of a plurality of points of said three-dimensional profile at each relative angular position of said tyre.

Preferably, it is foreseen to classify said tyre to be checked as including a defect if at least one of said differences is outside of a predetermined range of values.

Therefore, if the deformation for example is greater than a certain value, so that the difference between the measured height of a point of the measurement surface and the height of the same point in the three-dimensional profile is greater than a certain value, then it is deduced that the defect sought is present and therefore the tyre can be discarded. Further characteristics and advantages of the invention will become clear from the following description of a method and an apparatus for checking tyres according to the invention given for indicating and not limiting purposes with reference to the attached figures, in which:

- figure 1 is a schematic perspective view of an apparatus according to the present invention;
- figure 2 is a schematic side section view of the apparatus of figure 1 in a different operative condition;
- figure 3 is a schematic section view of a tyre as arranged in an apparatus according to the present invention;
- figure 4 is a schematic section view of a tyre during a first preferred example of a step of the method of the invention;
- figure 5 is a schematic section view of a tyre during a second preferred example of a step of the method of the invention;
- figure 6 is a schematic view from above of a tyre in a step of the method of the invention; and
- figure 7 is a schematic side section view of the tyre of figure 6 in a further step of the method of the invention.

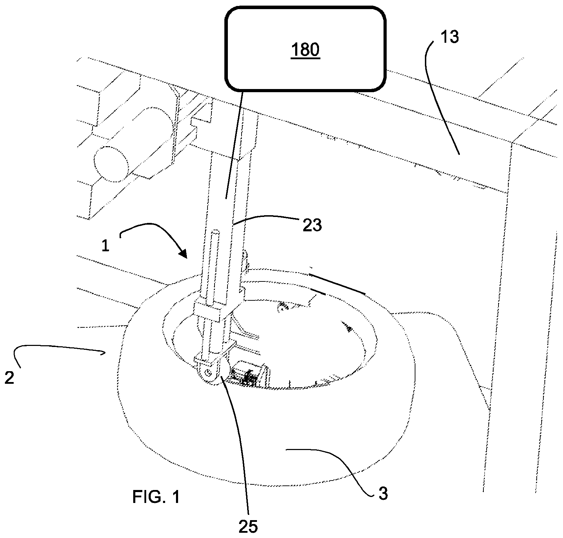

With reference to the attached figures, and in particular initially to figures 1 to 3, reference numeral 1 wholly indicates an apparatus for checking tyres in accordance with the present invention.

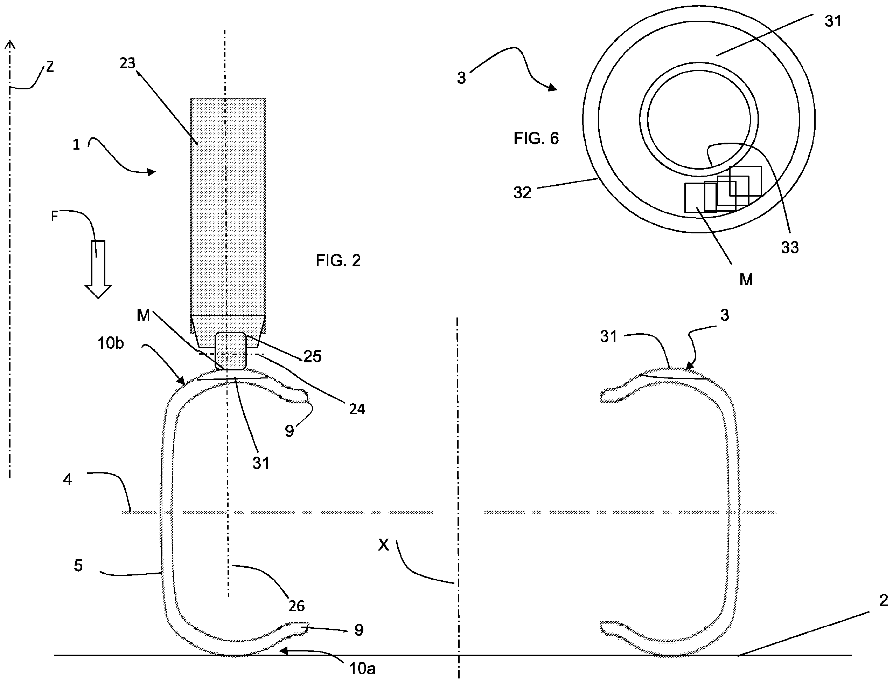

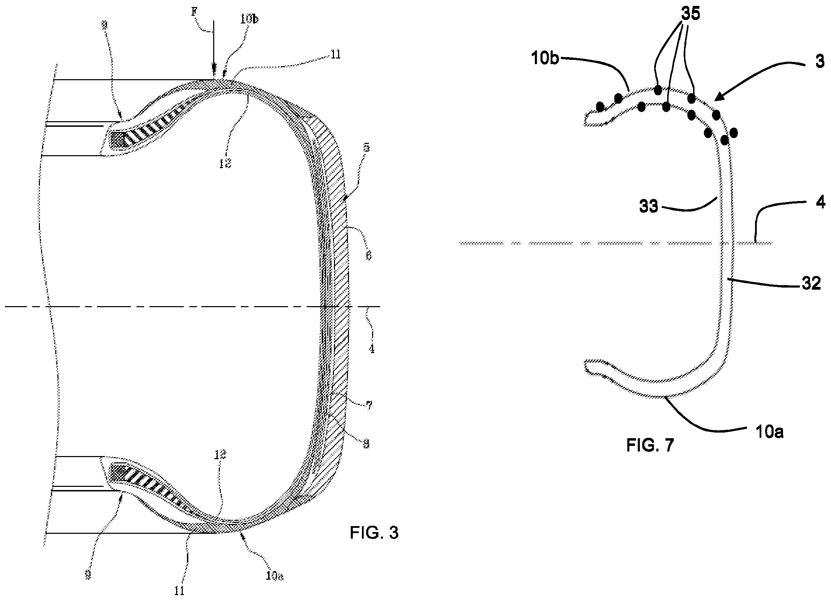

Reference numeral 2 indicates a resting plane, preferably horizontal, configured to receive a tyre 3 arranged with axial middle plane 4 (represented only in figure 2) substantially parallel to the resting plane. The tyre 3, having rotation axis X, comprises (see in particular figures 2 and 3) a crown portion 5 arranged substantially perpendicular to the axial middle plane, in a radially outer area of the tyre. Such a crown portion 5 corresponds to a tread band 6, to portions of a belt structure 7 and to portions of a carcass structure 8 arranged radially internally with respect to the tread band 6.

The tyre 3 belongs to a certain model, of a plurality of models. The model to which the tyre 3 belongs can be known in the field, for example commercialised, or a tester tyre. The number of models to which the tyre 3 can belong is many.

The tyre 3 also comprises two anchoring portions 9 arranged radially internally and respectively on opposite sides of the axial middle plane. The anchoring portions 9 are configured so as to engage with the rim of a wheel. The tyre 3 also comprises two side portions 10a, 10b that extend respectively on axially opposite sides of the axial middle plane between each of the anchoring portions 9 and the crown portion 5. Every side portion corresponds to a sidewall 11 and to portions of the carcass 12 arranged in axially inner position with respect to the sidewall 11.

When the tyre 3 is rested on the resting plane 2 one of the two side portions of the tyre is in direct contact with the aforementioned resting plane 2 defining a resting side portion 10a. The other of the two side portions of the tyre is arranged at a certain height with respect to the resting plane defining a free side portion 10b.

The resting plane 2 is arranged inside a frame 13, schematically and partially visible in figure 1, with respect to which it can rotate about an axis coinciding with the rotation axis X of the tyre resting on it. The apparatus 1 also comprises devices for setting the resting plane 2 in rotation with respect to the frame 13, not illustrated.

The apparatus 1 for checking tyres includes, in addition to the frame 13 and to the resting plane 2, a device, such as a pushing element 23, adapted for resting and pushing, deforming, a portion of the tyre 3, and in particular for resting and deforming a part of the free side portion 10b.

Preferably the pushing element 23 comprises a roller 25 arranged with rotation axis 24 preferably horizontal and, in use, oriented substantially according to a radial direction of the tyre resting on the resting plane 2 (see for example the configuration represented in figure 2).

The pushing element 23, for example including a pushing actuator, is configured to be pushed against the free side portion 10b along a pushing direction so as to apply a deformation, with force to be determined F on the free portion of the tyre. Preferably, the pushing direction comprises a component along a vertical axis, for example parallel to the axis Z as depicted in figure 2. Such an axis is indicated with 26 in the same figure and subsequently called "approach direction".

The apparatus 1 also comprises a checking unit 180 (visible only in figure 1) in which a three-dimensional profile of at least one portion of the tyre 3 is saved, for example in a suitable memory that is not visible. With reference to figures 6 and 7, such a portion comprises a portion of the surface of the tyre 1, preferably of a portion of the outer surface thereof, preferably at least one ring-shaped surface 31, having substantially the shape of a toric section, better described hereinafter.

The checking unit 180, more specifically, preferably includes a database in the memory, in which every model to which the tyre 3 can belong is associated with a statistical value, described hereinafter, and the three-dimensional profile described above. Every three-dimensional profile can for example be saved in a file.

The database can for example be made through a table of the type

| Model | Statistical value | Three-dimensional profile |
|---|---|---|
| Model 1 | Force 1 | File 1 |
| Model 2 | Force 2 | File 2 |
| ..... | .... | .... |
| Model N | Force N | File N |

As can be seen in the schematic representation of figure 6, the tyre 3 is delimited by an outer surface 32 and by an inner surface 33 which constitute, in every section of the tyre, the perimeter edge thereof. The pushing element 23, and in particular the roller 25, is adapted for making contact with a portion of the outer surface 32 at the free side portion 10b. Moreover, since preferably during checking the tyre is set in rotation with respect to the pushing element 23, as detailed hereinafter, a ring-shaped surface of the outer surface of the free side portion 10b makes contact with the roller 25.

Therefore, so that the roller 25 touches the tyre in a surface portion for which a three-dimensional profile has been acquired, such a profile comprises at least the ring-shaped surface 31.

Preferably, the checking unit 180 is also adapted to control the pushing element 23 towards and away from the tyre 3, as well as to adjust a height to which to shift the pushing element along the vertical axis Z so as to take the surface of the tyre 3 on which the pushing element is abutted to the same height. The height to which the surface of the tyre is brought depends, amongst other things, preferably on the type and/or model of tyre. Therefore, for example in the same memory in which the three-dimensional profile of the tyre is stored, a database is also saved in which every type and/or model of tyre is associated with a value of the device height to which the surface of the tyre is to be brought.

The three-dimensional profile saved in the database present in the memory of the checking unit 180 includes for example a plurality of sections like that of figure 7, which can consist of continuous lines or a plurality of discrete points, for example indicated with 35, the envelope of which describes the ring-shaped surface 31. Preferably, a three-dimensional profile of the entire inner surface 33 and of the entire outer surface 32 is present in the memory of the checking unit 180.

In the memory of the checking unit, the same one in which the database is present or in a different one, which may or may not be associated with the database, one or more functions are also saved that associate a device height to which to bring the surface with every height of the three-dimensional profile. In other words, for every model of tyre according to the aforementioned database, for every point i of the surface of the tyre on which the device can be abutted, there is the relationship:

$$\text{Device height of the i-th point} = f(\text{height of the i-th point according to profile})$$

Where device height of the i-th point is the height to which the surface with the i-th point is shifted through the device.

Such a relationship can for example be

$$\text{Device height of the i-th point} = (\text{height of the i-th point according to profile}) - D$$

where D is a constant.

It should be observed that the sign "-" is correct if the zero as reference is at the level of the resting plane, i.e. at least below the deformed free surface 10b. In the opposite case, if the zero were as reference above the free surface 10b there would be:

$$\text{Device height of the i-th point} = (\text{height of the i-th point according to profile}) + D$$

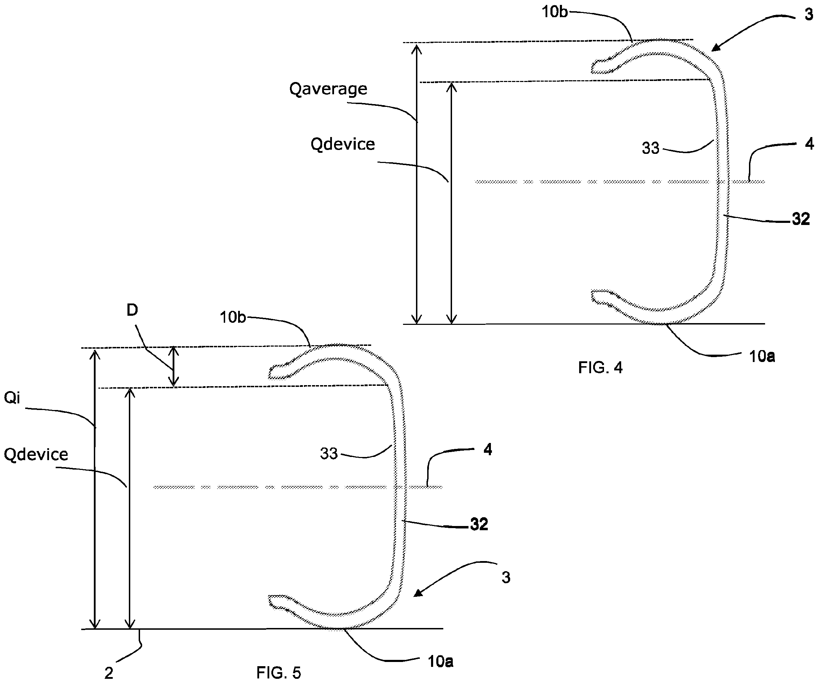

Such a function is represented for example in figure 5 where for every point i the height $Q_i$ is known from the three-dimensional profile and a constant value D (equal for each i-th point) is subtracted from it, from which a device height value to which to bring the i-th point is obtained. Such a device height value can therefore change from point to point.

Alternatively, as shown in figure 4, for every i-th point of the deformed surface of the tyre through the device, the height to which it is brought is constant, and is given by:

$$\text{device height} = \text{mean height} - D$$

where

mean height = mean height calculation of the i-th points of the surfaces to be deformed according to three-dimensional profile

and D is a constant.

Such a device height value is equal for every i-th point.

Also in this case, the previous consideration outlined above relative to the correctness of the sign "-" is valid.

Device height values are therefore present in association with every model of tyre of the plurality.

In use, to make the database as saved in the unit 180, N model tyres are provided in number equal to the models for which it is wished to detect defects. For every model tyre among the N, the following steps are carried out.

The foreseen models are inserted in the memory of the database, for example in number N. For every model, the three-dimensional profile, i.e. for example a file containing the heights of at least a plurality of points of a portion of the free outer surface thereof, is inserted. The three-dimensional profile can be obtained beforehand or at the same moment as the database is made.

Once this data is inserted in the database, the last piece of data is introduced, i.e. the statistical value. In order to obtain such a piece of data, the following is carried out.

The first of the N model tyres, indicated for the sake of simplicity with reference numeral 3, is arranged on the resting plane 2 with axial middle plane substantially parallel to the resting plane itself, so as to define the resting side portion 10a and the free side portion 10b.

Since the three-dimensional profile of the model tyre 3, as saved in the database, is known, its spatial position and therefore also its position relative to the resting plane 2 is known.

In order to apply the deformation towards the resting plane 2 to a measurement surface of the free side portion 10b, part of the ring-shaped surface 31, the pushing element 23 is positioned with respect to the free side portion 10b at the vertical on the measurement surface. The positioning does not require the detection of the position of the "upper edge" of the tyre, since such a position is known from the three-dimensional profile. Thereafter, an approach stroke to the free side portion 10b is activated bringing the pushing element 23 towards the tyre 3. Finally, a pushing stroke of the pushing element 23 against the free side portion 10b is activated.

In greater detail, the deformation applied has at least one motion component parallel to the rotation axis X of the tyre.

The movement of the device 23 can for example take place through a first radial shift and a second shift along the axis 26 towards the tyre.

The initial radial shift of the device 23 is carried out based on the size of the tyre being tested until the pushing element 23 is positioned with respect to the free side portion 10b at the vertical on the selected measurement surface. In other words, the shift is carried out until the radial position corresponding to the desired measurement surface is reached. The measurement surface is for example arranged at the area of the free side portion 10b of the tyre arranged at the greater height with respect to the resting plane 2 before the application of the deformation. Preferably, the measurement surface is arranged at the axially outer area of the free side portion 10b of the tyre.

Once the desired radial position has been reached, through the approach actuator the approach stroke to the free side portion 10b is activated bringing the pushing element 23 towards the tyre 3 along the approach direction 26.

The approach stroke is blocked when the outer surface 32 of the tyre 3 is reached, the height of which is known since the three-dimensional profile of the tyre is known.

Such a position allows the pushing element 23 to come into contact with the free side portion 10b. The pushing actuator is thus shifted so as to take the surface against which the device is abutted to the desired device height. The value of the device height is determined by recovering such a value from the database present in the checking unit 180 or from another location, as stated above. The value of the height depends on the model of tyre that has been rested on the resting plane 2 and on the type of function selected linking the value of the device height to the value of the three-dimensional profile of the height of the undeformed surface. However, it is possible to foresee a manual insertion of the value of the device height or a modification of the preset value of the height. The measurement surface M corresponds to the surface of the free side portion 10b in contact with the pushing element 23.

Possibly, the tyre can be either deflected or mounted on its own mounting rim and inflated before the action of pushing said measurement surface M to the device height.

The resting plane 2 is set in rotation about the rotation axis X of the tyre 3 maintaining the contact between the pushing element 23 and the free side portion 10b of the tyre to be checked. The pushing element 23 maintains its position and the roller 25 rotates on the free side portion 10b.

It is preferable for the measurement surface to be arranged at a substantially constant distance from the rotation axis. Therefore, the roller 25 comes into contact with a plurality of measurement surfaces M, all part of the ring-shaped surface 31. A plurality of measurement surfaces M angularly spaced from one another is thus defined, as exemplified in figure 6, where every measurement surface is indicated with a rectangle.

In accordance with a possible embodiment, the device height is kept substantially constant in the different steps of the checking of the tyre, according to the example of figure 4. Alternatively, like in figure 5, such a device height changes during the rotation of the tyre 3 and only the deformation D is constant. In any case, during the deformation applied to take the measurement surface M to the device height, the force F exerted by the device on the measurement surface M to take it to such a height is detected at every position taken up by the roller on a distinct measurement surface M.

A necessary force value F is then measured, point by point during the rotation, to take the measurement surface M to the desired device height. The measurement takes place for example through a sensor present in the same device 23. For example, a linear motor can be used the outputs of which allow the aforementioned measurement.

Preferably, the value of the force F along the entire rotation of the tyre is saved, said value being detected for example at least every 0.1 radians. The force values F thus saved and necessary to ensure that a surface portion of the tyre can reach the predetermined device height are subsequently processed in order to obtain a statistical value function of the saved force values F.

In order to obtain the statistical value, preferably all of the force values F are used, however it is possible for some data to be discarded if for example it is detected by mistake or in non-optimal conditions. For example, the average of the various force values F is calculated.

The value of the average of the force values F is thus saved in the database beside the model of tyre on which the measurement has been carried out. The procedure given above, i.e. the calculation of the statistical value of the force, is repeated for all of the models of the tyres, so as to complete the database.

Once the database has been completed as described above in the checking unit 180, any tyre - belonging to one of the N models foreseen - can be examined to detect the presence of defects thereof. For this purpose, a tyre to be checked is positioned on the resting plane 2.

First of all the model of the tyre to be checked is determined. The model can for example be determined through a sticker present in the tyre, by writing in it, or by a measurement that is carried out of some parameters of the tyre.

Taking the model as known, the database is interrogated and the statistical value of the force and the three-dimensional profile is detected from it.

The pushing roller 23 is brought towards the free surface of the tyre to be checked in an analogous way to what has been described above as far as the model tyres are concerned. However, the tyre to be checked is not deformed so as to take a portion thereof to a predetermined constant height. The surface of the tyre to be checked is deformed so as to apply a compression force onto it in value equal to the statistical value saved in the database for that model of tyre.

In detail, the pushing roller 23 rests on a portion of outer surface of the tyre to be checked, the portion preferably being ring-shaped. The precise deformed area is called measurement surface. Tyre and device are then set in relative rotation, so that the device 23 at every t deforms a different measurement surface, which continues to be part of the ring-shaped surface, angularly displaced with respect to the measurement surface with which the device was in contact at time t-1. This deformation ends when the entire ring-shaped surface has been crossed (i.e. a rotation of at least 360° has been carried out) and deformed by the device.

Preferably, the relative angular rotation speed between tyre and device is substantially constant. Preferably, the peripheral speed of the tyre is substantially constant and preferably dependent on the outer diameter of the tyre under examination.

The elastic deformation of the surface of the tyre through the device 23 results in a change of the height of the point at which the deformation is carried out. Since the device has a finite size, the height of a single point is not changed, but rather that of a surface of the tyre. The height to which the surface of the tyre is brought through the deformation is a function of the force with which the surface is deformed.

Preferably, the compression force applied, in value equal to the statistical value saved in the database, remains substantially constant for the entire rotation of the tyre.

During the rotation the height to which the measurement surface on which, moment by moment, the pushing roller 23 is rested is brought is monitored. This height is preferably measured during the entire rotation of 360° of the tyre, in this way obtaining a plurality of height values.

This height is detected either continuously (i.e. obtaining a continuous line of heights) or at intervals, preferably regular, for example every 0.1 radians, or also in an equivalent manner every 0.2 seconds considering a substantially constant rotation speed of the tyre.

Examining the value of the height, it is thus determined whether there are defects on the tyre. In fact, if the value of the height for one or more points of the measurement surface is outside of a predetermined range (while the compression force is applied) of a discard threshold, the tyre is considered defective due to the presence of a so-called weak sidewall defect.

In fact, this plurality of forces that are measured for each of the measurement surfaces deformed by the device substantially correspond to the reactions that each measurement surface has had to the deformation. At constant deformation force, if different points of the tyre react differently, this is indicative of the reaction - possibly different from point to point - of the portion of tyre in response to such a deformation. The tyre, however, has an imprint that changes at every moment t, and thus a different measured height is also due to the different characteristics of the tyre between one portion thereof and another, i.e. between one measurement surface and the other. Examining these differences, for example considering a "minimum" height as acceptable, it is nevertheless possible to highlight possible defects of the tyre, like for example a weak sidewall.

Therefore, the heights measured at compared either with a threshold value or a range of values, and if at least one measured height is outside of such a predetermined range of values, the tyre indeed has the weak sidewall defect. Such a tyre is thus, for example, discarded.

According to the invention a feedback system is optionally provided to monitor error situations in which, for whatever reason, the compression force, equal to the statistical value, present in the database is not correct or its reading has resulted in an error and therefore an incorrect force has been applied to the tyre. The application of an incorrect force results in anomalies in reading the height. In fact, the application of a force that is too high or too low results in the detection of a "flat" height value, i.e. with minimal oscillation with respect to a given value. The absence of oscillations in the measurement of the height (or the presence of very small oscillations) therefore is indicative of an error in the application of the force, i.e. an error in the size thereof. An error signal is thus supplied, for example visual and/or acoustic and preferably the value of the compression force is changed, for example by checking the database again or changing it.

**Claims**

1. Method for checking tyres (3) of a plurality of different models, said method comprising:

   - providing a database wherein each model of tyre of the plurality of different models is associated with a three-dimensional profile of a model tyre and a compression force, said three-dimensional profile including a height with respect to a resting plane (2) of said model tyre, the resting plane defining a resting side portion (10a) and a free side portion (10b), of a plurality of points of an outer surface of said free side portion (10b), the resting side portion (10a) resting on the resting plane (2) and the free side portion (10b) being opposite to the resting side portion (10a) and arranged at a certain height from the resting plane (2), said providing a database including:

      i. providing said model tyre on said resting plane (2), the model tyre having a rotation axis (X);
      ii. pushing a measurement surface (M) of said model tyre (3) through at least one device (23) up to a predetermined device height (Qdevice) that is calculated with respect to a value that is a function of said height of an undeformed measurement surface as present in said three-dimensional profile of the model tyre, said measurement surface belonging to said outer surface of said free side portion (10b);
      iii. setting said model tyre in relative rotation with respect to said at least one device (23), so as to push a plurality of different measurement surfaces (M), angularly spaced, along at least one complete relative rotation of said model tyre about said rotation axis (X);
      iv. measuring a force (F) exerted on said plurality of measurement surfaces (M) at a plurality of relative angular positions of said model tyre;
      v. calculating a statistical value as a function of said force (F);
      vi. associating said statistical value as a function of said force with said three-dimensional profile of model tyre in said database;
      vii. repeating the actions i.-vi. for all of the model tyres of said plurality of different models;

   - applying, to an outer surface of a tyre to be checked corresponding to a given model of tyre, a compression force equal to said statistical value as a function of said force (F) according to said model to which said tyre to be checked corresponds, as obtained from said database, to detect a possible defect of said tyre to be checked.

2. Method according to claim 1, wherein pushing said measurement surface of said model tyre (3) includes:

   • shifting said device (23) towards said model tyre arranged on the resting plane so as to rest on the measurement surface (M); and
   • pushing said measurement surface (M), through said device (23), down to a predetermined device height (Qdevice) calculated with respect to a value as a function of a height of said undeformed measurement surface as present in said three-dimensional profile.

3. Method according to claim 1 or 2, including:

   • keeping said device height (Qdevice) substantially constant along at least one complete relative rotation of said model tyre (3) with respect to said device (23) about said rotation axis (X).

4. Method according to one or more of the previous claims, including:

   • determining a mean height (Qaverage) with respect to said resting plane (2) of a plurality of points of said three-dimensional profile of said measurement surface (M) of said model tyre; and
   • pushing said measurement surface down to a predetermined device height (Qdevice) calculated with respect to said mean height of said measurement surface of said model tyre.

5. Method according to one or more of the previous claims, including:

   • calculating said device height (Qdevice) in a plurality of angularly spaced points; for each point, said device height being equal to the difference between a predetermined constant value (D) and the height of said point as present in said three-dimensional profile of each model tyre.

6. Method according to one or more of the previous claims, wherein applying said statistical value to an outer surface of said tyre to be checked includes:

• providing said tyre to be checked having a rotation axis (X) perpendicular to said resting plane (2) on said resting plane that defines a resting side portion (10a) and a free side portion (10b) of said tyre to be checked;
• determining the model of said tyre to be checked;
• recovering said three-dimensional profile and said statistical value of said force associated with said determined model of said tyre to be checked from said database;
• pushing a measurement surface (M) of said tyre to be checked so as to apply a device compression force on said measurement surface towards the resting plane, said device compression force being equal to said statistical value;
• setting said tyre (3) to be checked in relative rotation with respect to said device (23), so as to push a plurality of different measurement surfaces (M), angularly spaced, keeping the device compression force substantially constant on said measurement surfaces along at least one complete rotation about said rotation axis;
• measuring a height of said measurement surfaces at a plurality of relative angular positions of said tyre to be checked along said complete rotation during said pushing action;
• comparing said height of said measurement surfaces at a plurality of angular positions relative of said tyre to be checked with a height of a plurality of points of said three-dimensional profile of said tyre to be checked at the same angular positions; and
• determining whether said tyre to be checked has a defect based on said comparison.

7. Method according to claim 6, wherein pushing said measurement surface of said tyre to be checked includes:

• shifting said device (23) towards said tyre to be checked arranged on the resting plane so as to rest on a measurement surface; and
• pushing said measurement surface (M), through said device, so as to apply a device compression force on said measurement surface towards the resting plane (2), said device compression force being equal to said statistical value.

8. Method according to one or more of the previous claims, wherein calculating said statistical value includes calculating a mean or a median of said force measured on said plurality of measurement surfaces at a plurality of relative angular positions.

9. Method according to one or more of the previous claims, wherein providing said database includes, for each model tyre (3) of said plurality of different models, detecting at least one three-dimensional profile of a surface of said model tyre shaped in a ring (31) with centre in said rotation axis (X) of said tyre, said measurement surfaces (M) being part of said ring-shaped surface.

10. Method according to one or more of the previous claims, wherein pushing said measurement surface (M) of said model tyre, through said device (23), down to said height device includes pushing said measurement surface, through said device (23), down to a device height comprised between about 5 mm and about 30 mm.

11. Method according to one or more of the previous claims, wherein said action of measuring a height of said measurement surfaces at a plurality of relative angular positions of said tyre to be checked along said complete rotation during said pushing action, includes:

• determining variations of said measured height with respect to a mean of said measured height;
• sending an error signal if none of said variations is greater than a predetermined threshold.

12. Method according to claim 11, wherein said action of sending an error signal comprises:

• changing said statistical value applied.

13. Method according to one or more of the previous claims when dependent on claim 6, wherein comparing said height of said measurement surface of said tyre to be checked at a plurality of relative angular positions with a height of a plurality of points of said three-dimensional profile at the same angular positions includes comparing said height of said measurement surface and a corresponding height of a point of said three-dimensional profile every 0.1 radians.

14. Method according to one or more of the previous claims, wherein said action of measuring said force in said model tyre includes measuring said force every 0.1 radians.

15. Method according to one or more of the previous claims when dependent on claim 6, including:

• calculating a plurality of differences between said height of said measurement surfaces and said height of a plurality of points of said three-dimensional profile at each relative angular position of said tyre to be checked (3); and
• classifying said tyre to be checked as including a defect if at least one of said differences is outside of a predetermined range of values.

**Patentansprüche**

1. Verfahren zur Überprüfung von Reifen (3) einer Vielzahl von unterschiedlichen Modellen, wobei das Verfahren umfasst:
Bereitstellen einer Datenbank, in welcher jedes Reifenmodell der Vielzahl von unterschiedlichen Modellen mit einem dreidimensionalen Profil eines Modellreifens und einer Kompressionskraft assoziiert ist, wobei das dreidimensionale Profil eine Höhe in Bezug auf eine Auflageebene (2) des Modellreifens beinhaltet, wobei die Auflageebene einen aufliegenden Seitenabschnitt (10a) und einen freien Seitenabschnitt (10b) definiert, aus einer Vielzahl von Punkten an einer äußeren Oberfläche des freien Seitenabschnitts (10b), wobei der aufliegende Seitenabschnitt (10a) auf der Auflageebene (2) aufliegt und der freie Seitenabschnitt (10b) dem aufliegenden Seitenabschnitt (10a) entgegengesetzt und auf einer bestimmten Höhe über der Auflageebene (2) angeordnet ist, wobei das Bereitstellen einer Datenbank beinhaltet:

i. Bereitstellen des Modellreifens an der Auflageebene (2), wobei der Modellreifen eine Drehachse (X) aufweist;
ii. Drücken auf die Messoberfläche (M) des Modellreifens (3) mittels zumindest einer Einrichtung (23) bis zu einer vorbestimmten Einrichtungshöhe (Qdevice), die in Bezug auf einen Wert berechnet wird, der eine Funktion der Höhe einer nicht verformten Messoberfläche ist, wie sie in dem dreidimensionalen Profil des Modellreifens vorhanden ist, wobei die Messoberfläche zu der äußeren Oberfläche des freien Seitenabschnitts (10b) gehört;
iii. Versetzen des Modellreifens in relative Drehung in Bezug auf die zumindest eine Einrichtung (23), um gegen eine Vielzahl von unterschiedlichen Messoberflächen (M), die winkelförmig beabstandet sind, entlang zumindest einer vollständigen relativen Drehung des Modellreifens um die Drehachse (X) zu drücken;
iv. Messen einer Kraft (F), die auf die Vielzahl von Messoberflächen (M) an einer Vielzahl von relativen winkelförmigen Positionen des Modellreifens ausgeübt wird;
v. Berechnen eines statistischen Werts als eine Funktion der Kraft (F);
vi. Zuordnen des statistischen Werts als eine Funktion der Kraft zu dem dreidimensionalen Profil des Modellreifens in der Datenbank;
vii. Wiederholen der Vorgänge i.-vi. für alle Modellreifen der Vielzahl von unterschiedlichen Modellen;

- Anwenden, auf eine äußere Oberfläche eines zu überprüfenden Reifens, der einem gegebenen Reifenmodell entspricht, einer Kompressionskraft gleich dem aus der Datenbank erhaltenen statistischen Wert als eine Funktion der Kraft (F) gemäß dem Modell, welchem der zu überprüfende Reifen entspricht, um einen möglichen Defekt des zu überprüfenden Reifens zu erfassen.

2. Verfahren nach Anspruch 1, wobei das Drücken auf die Messoberfläche des Modellreifens (3) beinhaltet:

• Verschieben der Einrichtung (23) zu dem Modellreifen hin, der an der Auflageebene angeordnet ist, so dass sie auf der Messoberfläche (M) ruht;
und
• Herunterdrücken der Messoberfläche (M), mittels der Einrichtung (23), auf eine vorbestimmte Einrichtungshöhe (Qdevice), die in Bezug auf einen Wert als eine Funktion einer Höhe der nicht verformten Messoberfläche, wie sie in dem dreidimensionalen Profil vorhanden ist, berechnet wird.

3. Verfahren nach Anspruch 1 oder 2, das beinhaltet:

- Halten der Einrichtungshöhe (Qdevice) im Wesentlichen konstant entlang zumindest einer vollständigen relativen Drehung des Modellreifens (3) in Bezug auf die Einrichtung (23) um die Drehachse (X).

4. Verfahren nach einem oder mehreren der vorhergehenden Ansprüche, wobei das Verfahren beinhaltet:

- Bestimmen einer mittleren Höhe (Qaverage) einer Vielzahl von Punkten des dreidimensionalen Profils der Messoberfläche (M) des Modellreifens in Bezug auf die Auflageebene (2); und
- Herunterdrücken der Messoberfläche auf eine vorbestimmte Einrichtungshöhe (Qdevice), die in Bezug auf die mittlere Höhe der Messoberfläche des Modellreifens berechnet wird.

5. Verfahren nach einem oder mehreren der vorhergehenden Ansprüche, wobei das Verfahren beinhaltet:

- Berechnen der Einrichtungshöhe (Qdevice) an einer Vielzahl von winkelförmig beabstandeten Punkten; wobei für jeden Punkt die Einrichtungshöhe gleich der Differenz zwischen einem vorbestimmten konstanten Wert (D) und der Höhe des Punktes ist, wie sie in dem dreidimensionalen Profil eines jeden Modellreifens vorhanden ist.

6. Verfahren nach einem oder mehreren der vorhergehenden Ansprüche, wobei das Anwenden des statistischen Werts auf eine äußere Oberfläche des zu überprüfenden Reifens beinhaltet:

- Bereitstellen des zu überprüfenden Reifens, der eine Drehachse (X) senkrecht auf die Auflageebene (2) aufweist, an der Auflageebene, die einen aufliegenden Seitenabschnitt (10a) und einen freien Seitenabschnitt (10b) des zu überprüfenden Reifens definiert;
- Bestimmen des Modells des zu überprüfenden Reifens;
- Abrufen des dreidimensionalen Profils und des statistischen Werts der Kraft, die mit dem bestimmten Modell des zu überprüfenden Reifens assoziiert sind, aus der Datenbank;
- Drücken auf eine Messoberfläche (M) des zu überprüfenden Reifens, um eine Einrichtungs-Kompressionskraft auf die Messoberfläche zur Auflageebene hin auszuüben, wobei die Einrichtungs-Kompressionskraft gleich dem statistischen Wert ist;
- Versetzen des zu überprüfenden Reifens (3) in relative Drehung in Bezug auf die Einrichtung (23), um auf eine Vielzahl von unterschiedlichen Messoberflächen (M) zu drücken, die winkelförmig beabstandet sind, wobei die Einrichtungs-Kompressionskraft an den Messoberflächen entlang zumindest einer vollständigen Drehung um die Drehachse im Wesentlichen konstant gehalten wird;
- Messen einer Höhe der Messoberflächen an einer Vielzahl von relativen winkelförmigen Positionen des zu überprüfenden Reifens entlang der vollständigen Drehung während des Vorgangs des Drückens;
- Vergleichen der Höhe der Messoberflächen an einer Vielzahl von winkelförmigen Positionen relativ zu dem zu überprüfenden Reifen mit einer Höhe einer Vielzahl von Punkten des dreidimensionalen Profils des zu überprüfenden Reifens an denselben winkelförmigen Positionen; und
- Bestimmen, ob der zu überprüfende Reifen einen Defekt aufweist, auf Basis des Vergleichs.

7. Verfahren nach Anspruch 6, wobei das Drücken auf die Messoberfläche des zu überprüfenden Reifens beinhaltet:

- Verschieben der Einrichtung (23) zu dem zu überprüfenden Reifen hin, der an der Auflageebene angeordnet ist, so dass sie auf der Messoberfläche ruht; und
- Drücken auf die Messoberfläche (M) mittels der Einrichtung, um eine Einrichtungs-Kompressionskraft auf die Messoberfläche zur Auflageebene (2) hin auszuüben, wobei die Einrichtungs-Kompressionskraft gleich dem statistischen Wert ist.

8. Verfahren nach einem oder mehreren der vorhergehenden Ansprüche, wobei das Berechnen des statistischen Werts das Berechnen eines Mittels oder Medians der Kraft, die an der Vielzahl von Messoberflächen an einer Vielzahl von relativen winkelförmigen Positionen gemessen wurde, beinhaltet.

9. Verfahren nach einem oder mehreren der vorhergehenden Ansprüche, wobei das Bereitstellen der Datenbank für jeden Modellreifen (3) der Vielzahl von unterschiedlichen Modellen umfasst: Erfassen zumindest eines dreidimensionalen Profils einer Oberfläche des Modellreifens, die als ein Ring (31) mit dem Mittelpunkt in der Drehachse (X) des Reifens geformt ist, wobei die Messoberflächen (M) Teile der ringförmigen Oberfläche sind.

10. Verfahren nach einem oder mehreren der vorhergehenden Ansprüche, wobei das Herunterdrücken der Messoberfläche (M) des Modellreifens mittels der Einrichtung (23) auf die Einrichtungshöhe das Herunterdrücken der Messoberfläche mittels der Einrichtung (23) auf eine Einrichtungshöhe zwischen etwa 5 mm und etwa 30 mm beinhaltet.

11. Verfahren nach einem oder mehreren der vorhergehenden Ansprüche, wobei der Vorgang des Messens einer Höhe der Messoberflächen an einer Vielzahl von relativen winkelförmigen Positionen des zu überprüfenden Reifens entlang der vollständigen Drehung während dem Vorgang des Drückens beinhaltet:

• Bestimmen von Variationen der gemessenen Höhe in Bezug auf das Mittel der gemessenen Höhe;
• Senden eines Fehlersignals, wenn keine der Variationen größer als eine vorbestimmte Schwelle ist.

12. Verfahren nach Anspruch 11, wobei der Vorgang des Sendens eines Fehlersignals umfasst:

• Verändern des angewendeten statistischen Werts.

13. Verfahren nach einem oder mehreren der vorhergehenden Ansprüche, sofern abhängig von Anspruch 6, wobei das Vergleichen der Höhe der Messoberfläche des zu überprüfenden Reifens an einer Vielzahl von relativen winkelförmigen Positionen mit einer Höhe einer Vielzahl von Punkten des dreidimensionalen Profils an denselben winkelförmigen Positionen umfasst: Vergleichen der Höhe der Messoberfläche und einer entsprechenden Höhe eines Punkts des dreidimensionalen Profil im Abstand von jeweils 0,1 radians.

14. Verfahren nach einem oder mehreren der vorhergehenden Ansprüche, wobei der Vorgang des Messens der Kraft in dem Modellreifen das Messen der Kraft im Abstand von jeweils 0,1 radians beinhaltet.

15. Verfahren nach einem oder mehreren der vorhergehenden Ansprüche, sofern abhängig von Anspruch 6, wobei das Verfahren beinhaltet:

• Berechnen einer Vielzahl von Unterschieden zwischen der Höhe der Messoberflächen und der Höhe einer Vielzahl von Punkten des dreidimensionalen Profils an jeder relativen winkelförmigen Position des zu überprüfenden Reifens (3); und
• Klassifizieren des überprüfenden Reifens als einen Defekt aufweisend, wenn zumindest einer der Unterschiede außerhalb eines vorbestimmten Wertebereichs liegt.

## Revendications

1. Procédé de vérification de pneus (3) d'une pluralité de modèles différents, ledit procédé comprenant le fait :

- de fournir une base de données dans laquelle chaque modèle de pneu de la pluralité de modèles différents est associé à un profil tridimensionnel d'un pneu modèle et à une force de compression, ledit profil tridimensionnel comportant une hauteur par rapport à un plan de repos (2) dudit pneu modèle, le plan de repos définissant une partie latérale de repos (10a) et une partie latérale libre (10b), d'une pluralité de points d'une surface extérieure de ladite partie latérale libre (10b), la partie latérale de repos (10a) reposant sur le plan de repos (2) et la partie latérale libre (10b) étant opposée à la partie latérale de repos (10a) et agencée à une certaine hauteur par rapport au plan de repos (2), ladite fourniture d'une base de données comportant :

    i. la fourniture dudit pneu modèle sur ledit plan de repos (2), le pneu modèle ayant un axe de rotation (X) ;
    ii. la poussée d'une surface de mesure (M) dudit pneu modèle (3) à travers au moins un dispositif (23) jusqu'à une hauteur de dispositif prédéterminée (Qdevice) qui est calculée par rapport à une valeur qui est une fonction de ladite hauteur d'une surface de mesure non déformée telle que présente dans ledit profil tridimensionnel du pneu modèle, ladite surface de mesure appartenant à ladite surface extérieure de ladite partie latérale libre (10b) ;
    iii. la mise en rotation relative dudit pneu modèle par rapport audit au moins un dispositif (23), de manière à pousser une pluralité de surfaces de mesure différentes (M), espacées angulairement, conjointement avec au moins une rotation relative complète dudit pneu modèle autour dudit axe de rotation (X) ;
    iv. la mesure d'une force (F) exercée sur ladite pluralité de surfaces de mesure (M) à une pluralité de positions angulaires relatives dudit pneu modèle ;
    v. le calcul d'une valeur statistique en fonction de ladite force (F) ;
    vi. l'association de ladite valeur statistique en fonction de ladite force avec ledit profil tridimensionnel de pneu modèle dans ladite base de données ;

vii. la répétition des actions i.-vi. pour tous les pneus modèles de ladite pluralité de modèles différents ;

- d'appliquer, à une surface extérieure d'un pneu à vérifier correspondant à un modèle de pneu donné, une force de compression égale à ladite valeur statistique en fonction de ladite force (F) selon ledit modèle auquel ledit pneu à vérifier correspond, tel qu'obtenu à partir de ladite base de données, pour détecter un éventuel défaut dudit pneu à vérifier.

2. Procédé selon la revendication 1, dans lequel la poussée de ladite surface de mesure dudit pneu modèle (3) comporte :

• le déplacement dudit dispositif (23) vers ledit pneu modèle agencé sur le plan de repos de manière à reposer sur la surface de mesure (M) ; et
• la poussée de ladite surface de mesure (M), à travers ledit dispositif (23), vers le bas vers une hauteur de dispositif prédéterminée (Qdevice) calculée par rapport à une valeur en fonction d'une hauteur de ladite surface de mesure non déformée telle que présente dans ledit profil tridimensionnel.

3. Procédé selon la revendication 1 ou 2, comportant le fait :

• de maintenir ladite hauteur de dispositif (Qdevice) essentiellement constante conjointement avec au moins une rotation relative complète dudit pneu modèle (3) par rapport audit dispositif (23) autour dudit axe de rotation (X).

4. Procédé selon une ou plusieurs des revendications précédentes, comportant le fait :

• de déterminer une hauteur moyenne (Qaverage) par rapport audit plan de repos (2) d'une pluralité de points dudit profil tridimensionnel de ladite surface de mesure (M) dudit pneu modèle ; et
• de pousser ladite surface de mesure vers le bas vers une hauteur de dispositif prédéterminée (Qdevice) calculée par rapport à ladite hauteur moyenne de ladite surface de mesure dudit pneu modèle.

5. Procédé selon une ou plusieurs des revendications précédentes, comportant le fait :

• de calculer ladite hauteur de dispositif (Qdevice) dans une pluralité de points angulairement espacés ; pour chaque point, ladite hauteur de dispositif étant égale à la différence entre une valeur constante prédéterminée (D) et la hauteur dudit point tel que présent dans ledit profil tridimensionnel de chaque pneu modèle.

6. Procédé selon une ou plusieurs des revendications précédentes, dans lequel l'application de ladite valeur statistique à une surface extérieure dudit pneu à vérifier comporte :

• la fourniture dudit pneu à vérifier ayant un axe de rotation (X) perpendiculaire audit plan de repos (2) sur ledit plan de repos qui définit une partie latérale de repos (10a) et une partie latérale libre (10b) dudit pneu à vérifier ;
• la détermination du modèle dudit pneu à vérifier ;
• la récupération dudit profil tridimensionnel et de ladite valeur statistique de ladite force associée audit modèle déterminé dudit pneu à vérifier à partir de ladite base de données ;
• la poussée d'une surface de mesure (M) dudit pneu à vérifier de manière à appliquer une force de compression de dispositif sur ladite surface de mesure vers le plan de repos, ladite force de compression de dispositif étant égale à ladite valeur statistique ;
• la mise en rotation relative dudit pneu (3) à vérifier par rapport audit dispositif (23), de manière à pousser une pluralité de surfaces de mesure différentes (M), espacées angulairement, en maintenant la force de compression de dispositif essentiellement constante sur lesdites surfaces de mesure conjointement avec au moins une rotation complète autour dudit axe de rotation ;
• la mesure d'une hauteur desdites surfaces de mesure à une pluralité de positions angulaires relatives dudit pneu à vérifier conjointement avec ladite rotation complète pendant ladite action de poussée ;
• la comparaison de ladite hauteur desdites surfaces de mesure à une pluralité de positions angulaires par rapport audit pneu à vérifier avec une hauteur d'une pluralité de points dudit profil tridimensionnel dudit pneu à vérifier aux mêmes positions angulaires ; et
• la détermination du fait que ledit pneu à vérifier a un défaut sur la base de ladite comparaison.

7. Procédé selon la revendication 6, dans lequel la poussée de ladite surface de mesure dudit pneu à vérifier comporte :

• le déplacement dudit dispositif (23) vers ledit pneu à vérifier agencé sur le plan de repos de manière à reposer sur une surface de mesure ; et
• la poussée de ladite surface de mesure (M), à travers ledit dispositif, de manière à appliquer une force de compression de dispositif sur ladite surface de mesure vers le plan de repos (2), ladite force de compression de dispositif étant égale à ladite valeur statistique.

8. Procédé selon une ou plusieurs des revendications précédentes, dans lequel le calcul de ladite valeur statistique comporte le calcul d'une moyenne ou d'une médiane de ladite force mesurée sur ladite pluralité de surfaces de mesure à une pluralité de positions angulaires relatives.

9. Procédé selon une ou plusieurs des revendications précédentes, dans lequel la fourniture de ladite base de données comporte, pour chaque pneu modèle (3) de ladite pluralité de modèles différents, la détection d'au moins un profil tridimensionnel d'une surface dudit pneu modèle ayant la frome d'un anneau (31) avec le centre dans ledit axe de rotation (X) dudit pneu, lesdites surfaces de mesure (M) faisant partie de ladite surface en forme d'anneau.

10. Procédé selon une ou plusieurs des revendications précédentes, dans lequel la poussée de ladite surface de mesure (M) dudit pneu modèle, à travers ledit dispositif (23), vers le bas vers ladite hauteur de dispositif comporte la poussée de ladite surface de mesure, à travers ledit dispositif (23), vers le bas vers une hauteur de dispositif comprise entre environ 5 mm et environ 30 mm.

11. Procédé selon une ou plusieurs des revendications précédentes, dans lequel ladite action de mesure d'une hauteur desdites surfaces de mesure à une pluralité de positions angulaires relatives dudit pneu à vérifier conjointement avec ladite rotation complète pendant ladite action de poussée, comporte :

• la détermination de variations de ladite hauteur mesurée par rapport à une moyenne de ladite hauteur mesurée ;
• l'envoi d'un signal d'erreur si aucune desdites variations n'est supérieure à un seuil prédéterminé.

12. Procédé selon la revendication 11, dans lequel ladite action d'envoi d'un signal d'erreur comprend :

• le changement de ladite valeur statistique appliquée.

13. Procédé selon une ou plusieurs des revendications précédentes lorsqu'elles dépendent de la revendication 6, dans lequel la comparaison de ladite hauteur de ladite surface de mesure dudit pneu à vérifier à une pluralité de positions angulaires relatives avec une hauteur d'une pluralité de points dudit profil tridimensionnel aux mêmes positions angulaires comporte la comparaison de ladite hauteur de ladite surface de mesure avec une hauteur correspondante d'un point dudit profil tridimensionnel tous les 0,1 radians.

14. Procédé selon une ou plusieurs des revendications précédentes, dans lequel ladite action de mesure de ladite force dans ledit pneu modèle comporte la mesure de ladite force tous les 0,1 radians.

15. Procédé selon une ou plusieurs des revendications précédentes lorsqu'elles dépendent de la revendication 6, comportant le fait :

• de calculer une pluralité de différences entre ladite hauteur desdites surfaces de mesure et ladite hauteur d'une pluralité de points dudit profil tridimensionnel à chaque position angulaire relative dudit pneu (3) à vérifier ; et
• de classer ledit pneu à vérifier comme comportant un défaut si au moins l'une desdites différences est en dehors d'une plage prédéterminée de valeurs.

EP 3 563 137 B1

FIG. 1

FIG. 2

FIG. 6

EP 3 563 137 B1

FIG. 3

FIG. 7

EP 3 563 137 B1

EP 3 563 137 B1

Qaverage

Qdevice

10b

3

33

4

32

10a

FIG. 4

D

Qi

Qdevice

10b

33

4

32

3

2

10a

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060272408 A
- WO 2015079370 A
- WO 2015004587 A